# FASCICULE DE BREVET EUROPEEN

(11) **EP 1 443 239 B1**
(45) Date de publication et mention de la délivrance du brevet: **26.10.2005**
(21) Numéro de dépôt: 04290001.9
(22) Date de dépôt: 02.01.2004
(51) Int. Cl.: F16F 13/16

(54) **Articulation antivibratoire hydraulique à butées axiales, véhicule équipé d'un telle articulation, et procédé de fabrication d'un telle articulation**
Hydraulisches, schwingungsdämpfendes Gelenk mit Axialanschlägen, Kraftfahrzeug mit solchem Gelenk und Verfahren zur Herstellung eines solchen Gelenkes
Hydraulic vibration isolating joint with axial end-stops, a vehicle equipped with such a joint and manufacturing method for such a joint

(30) Priorité: 09.01.2003 FR 0300182
(43) Date de publication de la demande: 04.08.2004
(73) Titulaire: HUTCHINSON S.A., 75008 Paris (FR)
(72) Inventeur: Bouhier, Bernard, 41140 Noyers sur Cher (FR); Carabolante, Pascal, 18100 Saint Hilaire de Court (FR); Gautier, Pierre, 18000 Bourges (FR)
(74) Mandataire: Garel, Régis

(56) Documents cités:
- EP-A- 1 010 915
- DE-C- 4 302 238
- FR-A- 2 788 822
- US-A- 5 711 513
- PATENT ABSTRACTS OF JAPAN vol. 2000, no. 04, 31 août 2000 (2000-08-31) -& JP 2000 018312 A (BRIDGESTONE CORP), 18 janvier 2000 (2000-01-18)

## Description

La présente invention est relative aux articulations antivibratoires hydrauliques, aux véhicules équipés de telles articulations, et aux procédés de fabrication de telles articulations.

Plus particulièrement, l'invention concerne une articulation antivibratoire hydraulique destinée à être interposée entre des premier et deuxième éléments rigides pour amortir des vibrations au moins selon un premier axe, cette articulation étant adaptée pour être emboîtée dans un logement appartenant au deuxième élément rigide, et ladite articulation comportant :
- une armature rigide intérieure qui s'étend longitudinalement selon un deuxième axe perpendiculaire au premier axe et qui est destinée à être solidarisée avec le premier élément rigide,
- une armature rigide extérieure qui présente une forme tubulaire centrée sur le deuxième axe et qui entoure l'armature intérieure, cette armature extérieure présentant un certain diamètre intérieur et un certain diamètre extérieur,
- un corps en élastomère reliant entre elles les armatures intérieure et extérieure en délimitant avec celles-ci au moins deux chambres hydrauliques remplies de liquide, qui sont disposées de part et d'autre de l'armature intérieure et qui sont reliées entre elles par au moins un passage étranglé ,
- une armature intermédiaire rigide qui est noyée dans le corps en élastomère au voisinage de l'armature extérieure et qui est évidée en regard des chambres hydrauliques, cette armature intermédiaire comportant deux anneaux rigides qui sont centrés sur le deuxième axe et qui encadrent axialement les chambres hydrauliques, l'armature extérieure enserrant ces deux anneaux rigides, en fermant les chambres hydrauliques de façon étanche,
dans laquelle l'armature intermédiaire comporte au-delà des deux anneaux rigides, des première et seconde collerettes qui s'étendent radialement vers l'extérieur, en formant ainsi deux épaulements orientés axialement vers les deux anneaux et entre lesquelles est maintenue sans jeu l'armature extérieure,
dans laquelle les première et seconde collerettes présentent un encombrement radial supérieur au diamètre intérieur de l'armature extérieure et servent ainsi de butées axiales à l'armature extérieure,
dans laquelle le diamètre extérieur de l'armature extérieure est supérieur à l'encombrement radial d'au moins la première collerette,
dans laquelle les première et seconde collerettes sont revêtues d'une couche élastomère appartenant au corps en élastomère.

Le document US-A-5,711,513 décrit un exemple d'articulation de ce type.

Le document FR-A-2 788 822 décrit un support antivibratoire hydraulique comportant une armature rigide intérieure, une armature rigide extérieure, un corps élastomère le reliant et une armature intermédiaire rigide présentant une collerette.

La présente invention a notamment pour objet de faciliter le montage de telles articulations en permettant une absence de jeu radial entre l'armature extérieure et l'élément dans lequel elle est montée.

A cet effet, selon l'invention, une articulation hydraulique du genre en question est caractérisée le diamètre extérieur de l'armature extérieure est supérieur à l'encombrement radial de la couche élastomère recouvrant la première collerette

Grâce à ces dispositions, on peut emboîter l'articulation dans un logement de réception, et le contact direct entre l'armature extérieure et la paroi du logement garantit l'absence de jeu même en présence de vibrations.

Eventuellement, le diamètre intérieur de l'armature extérieure peut être inférieur d'au moins 0,5 mm à l'encombrement radial des première et seconde collerettes.

Par ailleurs, l'invention a également pour objet un véhicule automobile comportant un train de roulement arrière équipé de bras destinés à relier ce train de roulement arrière au reste du châssis, chaque bras présentant une paroi annulaire délimitant au moins un logement dans lequel est engagée une articulation antivibratoire hydraulique telle que définie ci-dessus, l'armature extérieure étant en contact radial direct avec ladite paroi annulaire.

Dans des modes de réalisation préférés du véhicule automobile selon l'invention, on peut éventuellement avoir recours en outre à l'une et/ou à l'autre des dispositions suivantes :
- l'armature extérieure est emboîtée serrée dans le logement;
- l'articulation antivibratoire est montée en chape entre deux flasques parallèles, disposés perpendiculairement au deuxième axe et appartenant au premier élément rigide ;
- la seconde collerette a un encombrement radial supérieur au diamètre extérieur de l'armature extérieure et est en appui sur la partie rigide délimitant le logement.

Enfin, l'invention a encore pour objet un procédé de fabrication d'une articulation antivibratoire telle que définie ci-dessus, comportant les étapes consistant à :
a) mouler le corps en élastomère sur l'armature intérieure et l'armature intermédiaire,
b) engager sur le corps en élastomère un tube métallique dépourvu d'élastomère qui présente une largeur intérieure supérieure à l'encombrement radial d'un des deux épaulements constitués des deux collerettes revêtues d'une couche d'élastomère appartenant audit corps en élastomère,
c) positionner le tube métallique entre les deux épaulements,
d) puis rétreindre le tube métallique pour obtenir l'armature extérieure du support, en enserrant les premier et deuxième anneaux de l'armature intermédiaire pour d'une part bloquer l'armature extérieure entre les deux épaulements et d'autre part fermer les deux chambres hydrauliques de façon étanche le rétreint étant effectué de manière à ce que le diamètre extérieur de l'armature extérieure soit supérieur à l'encombrement radial de la couche élastomère recouvrant la première collerette.

Avantageusement, l'étape (d) a lieu dans un bain de liquide qui remplit les chambres hydrauliques.

D'autres caractéristiques et avantages de l'invention apparaîtront au cours de la description suivante d'une forme de réalisation, donnée à titre d'exemple non limitatif, en regard des dessins joints.

Sur les dessins :
- la figure 1 est une vue schématique d'un véhicule automobile comportant un train arrière équipé de bras comportant des articulations antivibratoire hydrauliques selon l'invention,
- la figure 2 est une vue en perspective du train de roulement arrière équipé de deux articulations antivibratoires selon une forme de réalisation de l'invention, du véhicule de la figure 1,
- la figure 3 montre un exemple de montage d'une des articulations antivibratoires de la figure 2, entre des flasques solidaires de la caisse du véhicule,
- la figure 4 est une vue en coupe verticale, selon la ligne IV-IV de la figure 3, d'une des articulations antivibratoires hydrauliques qui peuvent équiper les bras du train de roulement de la figure 2, selon une forme de réalisation de l'invention,
- la figure 5 est une vue en coupe selon la ligne V-V de la figure 4,
- la figure 6 est une vue montrant l'articulation antivibratoire hydraulique dans une étape intermédiaire de sa fabrication,
- et la figure 7 est une vue similaire à celle de la figure 6 et montrant l'articulation antivibratoire hydraulique dans sa forme finale.

Sur les différentes figures, les mêmes références désignent des éléments identiques ou similaires.

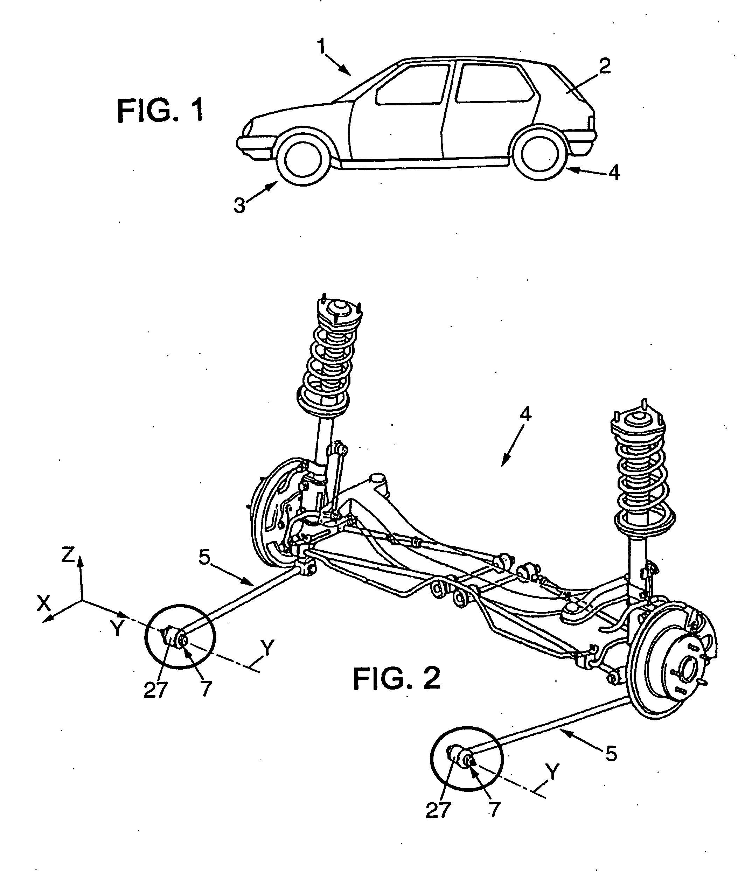

La figure 1 représente un véhicule automobile 1 qui comporte une caisse 2 portée par un train de roulement avant 3 et un train de roulement arrière 4.

Comme représenté sur la figure 2, le train de roulement arrière 4 peut comporter des bras longitudinaux 5 dont l'extrémité avant est reliée à la caisse 2 du véhicule par l'intermédiaire d'articulations antivibratoires hydrauliques 7 qui sont engagées dans des logements desdits bras formés dans des bagues cylindriques 27 d'axe Y parallèle à la direction horizontale transversale Y du véhicule.

Les articulations antivibratoires hydrauliques 7 constituent des liaisons souples qui permettent un certain débattement entre la caisse 2 et un bras 5 selon l'axe transversal Y, l'axe horizontal longitudinal X du véhicule et l'axe vertical Z du véhicule, tout en amortissant les mouvements vibratoires relatifs entre le bras 5 et la caisse 2 notamment selon l'axe X.

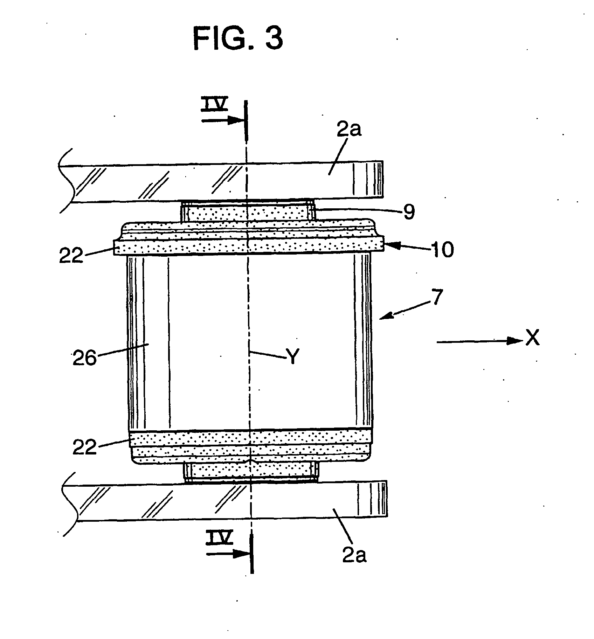

Comme représenté sur la figure 3, l'articulation antivibratoire hydraulique 7, et plus précisément l'armature métallique intérieure 9 de cette articulation peut par exemple être montée en chape entre deux flasques 2a solidaires de la caisse 2 du véhicule.

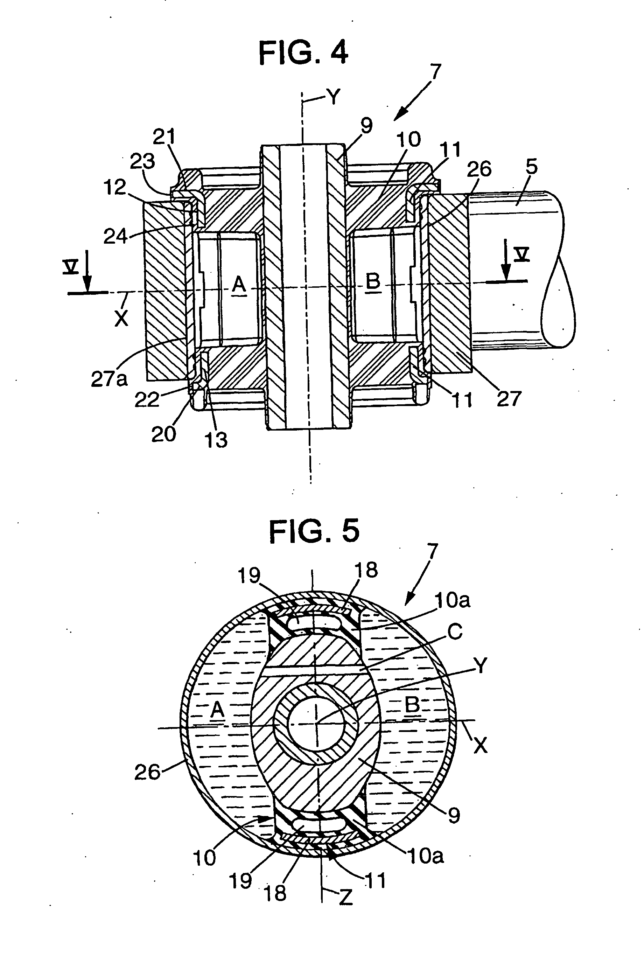

Comme représenté sur les figures 4 et 5, l'armature métallique rigide intérieure 9 s'étend longitudinalement selon l'axe transversal Y et est destinée à être fixée à la caisse 2 du véhicule.

Sur cette armature intérieure est surmoulé et adhérisé un corps en élastomère 10 délimitant partiellement deux chambres hydrauliques A, B, qui sont disposées de part et d'autre de l'armature intérieure 9 et qui sont reliées entre elles par un canal étranglé C percé dans ladite armature intérieure 9 ou ménagé autrement.

Dans le corps en élastomère 10 est noyée une armature intermédiaire rigide 11 qui se présente par exemple sous la forme d'une pièce métallique ayant une forme générale de révolution autour de l'axe Y. Cette armature intermédiaire est ajourée au niveau des chambres hydrauliques A, B de façon à permettre la réalisation de ces chambres lors du moulage du corps en élastomère 10.

L'armature intermédiaire 11 forme ainsi :
- deux anneaux rigides 12, 13 qui sont centrés sur l'axe Y et qui sont disposés axialement de part et d'autre des chambres hydrauliques A, B
- et d'autre part, deux pontets verticaux 18 qui relient l'un à l'autre les deux anneaux 12, 13 au niveau de la partie 10a du corps en élastomère formant une cloison entre les deux chambres hydrauliques A, B. Chaque cloison peut éventuellement être pourvue d'un évidemment 19 en forme de puits s'étendant longitudinalement selon l'axe Y, pour augmenter la souplesse verticale de l'articulation 7.

De plus, les anneaux 12, 13 se prolongent chacun à leur extrémité la plus éloignée des chambres hydrauliques, par une collerette 20,21 qui s'étend radialement vers l'extérieur, formant chacune un épaulement.

Une relativement fine couche d'élastomère 22, 23, appartenant au corps en élastomère 10, peut éventuellement recouvrir entièrement chaque collerette 20, 21.

Enfin, une armature tubulaire extérieure 26, réalisée de préférence uniquement en métal sans aucun surmoulage d'élastomère, enserre les deux anneaux 12, 13 en fermant les chambres A, B. L'armature tubulaire extérieure 26 présente un diamètre intérieur inférieur à l'encombrement radial des deux collerettes 20,21 et un diamètre extérieur supérieur à l'encombrement radial de la couche élastomère recouvrant la collerette 20.

La seconde collerette 21 a un encombrement radial supérieur au diamètre extérieur de l'armature extérieure 26.

L'articulation antivibratoire 7 ainsi constituée est emboîtée verticalement dans la bague cylindrique 27 susmentionnée, jusqu'à ce que l'épaulement constitué par la collerette 21 recouverte de sa couche en élastomère repose sur une des faces d'extrémité de la bague 27 .

Le logement 27a délimité par la bague 27 présente avantageusement un diamètre intérieur sensiblement égal au diamètre extérieur de l'armature extérieure 26 de façon que l'armature extérieure 26 soit emboîtée serrée dans le logement.

De cette façon, l'articulation antivibratoire 7 permet la reprise d'efforts axiaux sans risque de démanchement de l'armature extérieure 26 par rapport au corps en élastomère, l'armature extérieure 26 étant bloquée dans les deux sens par les collerettes 20,21.

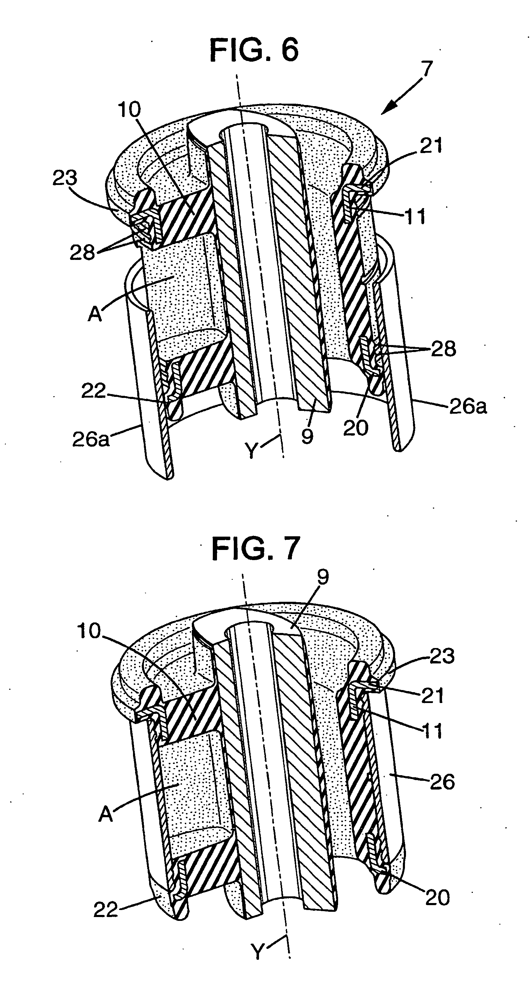

L'articulation antivibratoire hydraulique 7 qui vient d'être décrite peut par exemple être réalisée comme suit :
- on moule et on vulcanise le corps en élastomère 10 sur l'armature intérieure 9 et l'armature intermédiaire 11,
- on engage sur le corps en élastomère (10) un tube métallique 26a dépourvu d'élastomère qui présente une largeur intérieure supérieure ou égale à l'encombrement radial de l'épaulement constitué par la collerette 20 revêtue de sa couche d'élastomère 22 appartenant audit corps en élastomère (figure 6),
- puis on positionne le tube métallique (26a) entre les deux épaulements,
- ensuite, le corps en élastomère (10) et le tube métallique (26a) étant placés dans un bain de liquide, on rétreint le tube métallique pour obtenir l'armature extérieure (26) du support, en enserrant les premier et deuxième anneaux (12, 13) de l'armature intermédiaire pour d'une part bloquer sans jeu l'armature extérieure entre les deux épaulements et d'autre part fermer les deux chambres hydrauliques (A, B) de façon étanche (figure 7).

De préférence, la couche en élastomère 22, 23 revêtant les deux collerettes 20, 21 comporte des nervures annulaires 28 formant des lèvres d'étanchéité (voir figure 6), qui sont au moins partiellement écrasées lors du rétreint du tube 26a.

## Revendications

1. Articulation antivibratoire hydraulique (7) destinée à être interposée entre des premier et deuxième éléments rigides (2, 5) pour amortir des vibrations au moins selon un premier axe (X), cette articulation étant adaptée pour être emboîtée dans un logement (27a) appartenant au deuxième élément rigide (5), et ladite articulation comportant :
- une armature rigide intérieure (9) qui s'étend longitudinalement selon un deuxième axe (Y) perpendiculaire au premier axe (X) et qui est destinée à être solidarisée avec le premier élément rigide (2),
- une armature rigide extérieure (26) qui présente une forme tubulaire centrée sur le deuxième axe (Y) et qui entoure l'armature intérieure (9), cette armature extérieure présentant un certain diamètre intérieur et un certain diamètre extérieur,
- un corps en élastomère (10) reliant entre elles les armatures intérieure et extérieure (9, 26) en délimitant avec celles-ci au moins deux chambres hydrauliques (A, B) remplies de liquide, qui sont disposées de part et d'autre de l'armature intérieure (9) et qui sont reliées entre elles par au moins un passage étranglé (C),
- une armature intermédiaire rigide (11) qui est noyée dans le corps en élastomère (10) au voisinage de l'armature extérieure (26) et qui est évidée en regard des chambres hydrauliques (A, B), cette armature intermédiaire comportant deux anneaux rigides (12, 13) qui sont centrés sur le deuxième axe (Y) et qui encadrent axialement les chambres hydrauliques (A, B), l'armature extérieure (26) enserrant ces deux anneaux rigides, en fermant les chambres hydrauliques (A, B) de façon étanche,
dans laquelle l'armature intermédiaire (11) comporte au-delà des deux anneaux rigides (12,13), des première et seconde collerettes (20,21) qui s'étendent radialement vers l'extérieur, en formant ainsi deux épaulements orientés axialement vers les deux anneaux (12,13) et entre lesquelles est maintenue sans jeu l'armature extérieure (26),
dans laquelle les première et seconde collerettes (20,21) présentent un encombrement radial supérieur au diamètre intérieur de l'armature extérieure (26) et servent ainsi de butées axiales à l'armature extérieure,
dans laquelle le diamètre extérieur de l'armature extérieure (26) est supérieur à l'encombrement radial d'au moins la première collerette (20),
dans laquelle les première et seconde collerettes (20,21) sont revêtues d'une couche élastomère (22, 23) appartenant au corps en élastomère (10),
**caractérisée en ce que** le diamètre extérieur de l'armature extérieure (26) est supérieur à l'encombrement radial de la couche élastomère (22) recouvrant la première collerette (20).

2. Articulation antivibratoire hydraulique selon la revendication 1, dans laquelle le diamètre intérieur de l'armature extérieure (26) est inférieur d'au moins 0,5 mm à l'encombrement radial des première et seconde collerettes (20,21).

3. Véhicule automobile comportant un train de roulement équipé de deux bras rigides (5), chaque bras rigide (5) présentant une paroi annulaire (27) qui délimite au moins un logement (27a) dans lequel est engagée une articulation antivibratoire hydraulique (7) selon l'une quelconque des revendications 1 à 2, l'armature extérieure (26) étant en contact radial direct avec ladite paroi annulaire (27).

4. Véhicule automobile selon la revendication 3, dans lequel l'armature extérieure (26) est emboîtée serrée dans le logement (27a).

5. Véhicule automobile selon l'une quelconque des revendications 3 et 4, dans lequel l'articulation antivibratoire (7) est montée en chape entre deux flasques parallèles (2a), disposés perpendiculairement au deuxième axe (Y) et appartenant au premier élément rigide (2).

6. Véhicule automobile selon l'une quelconque des revendications 3 à 5, dans lequel la seconde collerette (21) a un encombrement radial supérieur au diamètre extérieur de l'armature extérieure (26) et est en appui contre le bras rigide (5).

7. Procédé de fabrication d'une articulation antivibratoire hydraulique (7) selon l'une quelconque des revendications 1 et 2, comportant les étapes consistant à :
a) mouler le corps en élastomère (10) sur l'armature intérieure (9) et l'armature intermédiaire (11),
b) engager sur le corps en élastomère (10) un tube métallique (26a) dépourvu d'élastomère qui présente une largeur intérieure supérieure à l'encombrement radial d'un des deux épaulements formés par les deux collerettes (20,21),
c) positionner le tube métallique (26a) entre les deux épaulements,
d) puis rétreindre le tube métallique pour obtenir l'armature extérieure du support, en enserrant les premier et deuxième anneaux de l'armature intermédiaire pour d'une part bloquer sans jeu l'armature extérieure entre les deux épaulements et d'autre part fermer les deux chambres hydrauliques (A, B) de façon étanche, le rétreint étant effectué de manière à ce que le diamètre extérieur de l'armature extérieure (26) soit supérieur à l'encombrement radial de la couche élastomère (22) recouvrant la première collerette (20).

8. Procédé de fabrication selon la revendication 7, dans lequel l'étape (d) a lieu dans un bain de liquide qui remplit les chambres hydrauliques (A, B).

## Patentansprüche

1. Hydraulisches schwingungsdämpfendes Gelenk (7), welches dazu bestimmt ist, zwischen einem ersten und einem zweiten starren Element (2, 5) angeordnet zu werden, um Schwingungen zumindest nach einer ersten Achse (X) zu dämpfen, wobei dieses Gelenk angepasst ist, um in eine zu dem zweiten starren Element (5) gehörende Aufnahme (27a) gesteckt zu werden, und das genannte Gelenk Folgendes aufweist:
- eine starre Innenarmatur (9), welche sich nach einer zweiten, senkrecht zu der ersten Achse (X) verlaufenden Achse (Y) in Längsrichtung erstreckt und dazu bestimmt ist, mit dem ersten starren Element (2) fest verbunden zu werden,
- eine starre Außenarmatur (26), welche eine auf die zweite Achse (Y) zentrierte Rohrform aufweist und die Innenarmatur (9) umgibt, wobei diese Außenarmatur einen bestimmten Innendurchmesser und einen bestimmten Außendurchmesser aufweist,
- einen Elastomerkörper (10), welcher die Innenarmatur und die Außenarmatur (9, 26) miteinander verbindet und dabei mit diesen mindestens zwei mit Flüssigkeit gefüllte hydraulische Kammern (A, B) begrenzt, welche beidseitig der Innenarmatur (9) angeordnet sind und durch mindestens einen verengten Durchgang (C) miteinander verbunden sind,
- eine starre Zwischenarmatur (11), welche in dem Elastomerkörper (10) in der Nähe der Außenarmatur (26) eingebettet ist und in zu den hydraulischen Kammern (A, B) zugewandter Richtung ausgehöhlt ist, wobei diese Zwischenarmatur zwei starre Ringe (12, 13) aufweist, welche auf die zweite Achse (Y) zentriert sind und die hydraulischen Kammern (A, B) axial umrahmen, wobei die Außenarmatur (26) diese zwei starren Ringe einspannt und dabei die hydraulischen Kammern (A, B) dicht verschließt,
bei dem die Zwischenarmatur (11) über die zwei starren Ringe (12, 13) hinaus einen ersten und einen zweiten Bund (20, 21) aufweist, welche sich radial nach außen erstrecken und dabei folglich zwei Ansätze bilden, welche axial in Richtung der beiden Ringe (12, 13) ausgerichtet sind und zwischen denen die Außenarmatur (26) ohne Spiel festgehalten ist,
bei dem der erste und der zweite Bund (20, 21) einen radialen Platzbedarf aufweisen, welcher den Innendurchmesser der Außenarmatur (26) übersteigt, und somit als Axialanschläge für die Außenarmatur dienen, bei dem der Außendurchmesser der Außenarmatur (26) den radialen Platzbedarf mindestens des ersten Bundes (20) übersteigt,
bei dem der erste und der zweite Bund (20, 21) mit einer Elastomerschicht (22, 23) überzogen sind, welche zu dem Elastomerkörper (10) gehört,
**dadurch gekennzeichnet, dass** der Außendurchmesser der Außenarmatur (26) den radialen Platzbedarf der den ersten Bund (20) überziehenden Elastomerschicht (22) übersteigt.

2. Hydraulisches schwingungsdämpfendes Gelenk nach Anspruch 1, bei dem der Innendurchmesser der Außenarmatur (26) um mindestens 0,5 mm kleiner ist als der radiale Platzbedarf des ersten und des zweiten Bundes (20, 21).

3. Kraftfahrzeug mit einem Fahrwerk, welches mit zwei starren Armen (5) ausgestattet ist, wobei jeder starre Arm (5) eine ringförmige Wand (27) aufweist, welche mindestens eine Aufnahme (27a) begrenzt, in welche ein hydraulisches schwingungsdämpfendes Gelenk (7) nach einem der Ansprüche 1 bis 2 greift, wobei die Außenarmatur (26) in direktem radialem Kontakt mit der genannten ringförmigen Wand (27) steht.

4. Kraftfahrzeug nach Anspruch 3, bei dem die Außenarmatur (26) in die Aufnahme (27a) eingespannt gesteckt ist.

5. Kraftfahrzeug nach einem der Ansprüche 3 und 4, bei dem das schwingungsdämpfende Gelenk (7) zwischen zwei parallel verlaufenden, senkrecht zu der zweiten Achse (Y) angeordneten und zu dem ersten starren Element (2) gehörenden Flanschen (2a) eingegabelt montiert ist.

6. Kraftfahrzeug nach einem der Ansprüche 3 bis 5, bei dem der zweite Bund (21) einen radialen Platzbedarf aufweist, welcher den Außendurchmesser der Außenarmatur (26) übersteigt und gegen den starren Arm (5) abgestützt ist.

7. Verfahren zur Herstellung eines hydraulischen schwingungsdämpfenden Gelenks (7) nach einem der Ansprüche 1 und 2, welches folgende Schritte aufweist:
a) den Elastomerkörper (10) an der Innenarmatur (9) und der Zwischenarmatur (11) anformen,
b) auf den Elastomerkörper (10) ein metallisches, elastomerfreies Rohr (26a) aufstecken, welches eine lichte Breite aufweist, welche den radialen Platzbedarf eines der zwei durch die zwei Bünde (20, 21) gebildeten Ansätze übersteigt,
c) das metallische Rohr (26a) zwischen den zwei Ansätzen positionieren,
d) anschließend das metallische Rohr eine Querschnittsverminderung erfahren lassen, um die Außenarmatur des Lagers zu erhalten, und dabei den ersten und den zweiten Ring der Zwischenarmatur einspannen, um einerseits die Außenarmatur zwischen den zwei Ansätzen ohne Spiel zu blockieren und andererseits die zwei hydraulischen Kammern (A, B) dicht zu verschließen, wobei die Querschnittsverminderung derart durchgeführt wird, dass der Außendurchmesser der Außenarmatur (26) den radialen Platzbedarf der den ersten Bund (20) überziehenden Elastomerschicht (22) übersteigt.

8. Herstellungsverfahren nach Anspruch 7, bei dem der Schritt (d) in einem die hydraulischen Kammern (A, B) füllenden Flüssigkeitsbad stattfindet.

## Claims

1. Hydraulic antivibration pivot (7) intended to be inserted between a first and a second rigid elements (2,5) to damp vibrations along at least a first axis (X), this pivot being designed to be inserted into a housing (27a) belonging to the second rigid element (5), and the said pivot comprising:
- an internal rigid reinforcement (9) that extends longitudinally along a second axis (Y) perpendicular to the first axis (X) and that is intended to be fixed to the first rigid element (2),
- an external rigid reinforcement (26) that is of a tubular shape centred on the second axis (Y) and that surrounds the internal reinforcement (9), this external reinforcement having a certain inside diameter and a certain outside diameter,
- an elastomer body (10) connecting together the internal and external reinforcements (9,26) while defining with the latter at least two liquid-filled hydraulic chambers (A,B), which are situated on each side of the internal reinforcement (9) and which are connected to each other by at least one throttled passage (c),
- and a rigid intermediate reinforcement (11) which is embedded in the elastomer body (10) near the external reinforcement (26) and which is cut away over the hydraulic chambers (A,B), this intermediate reinforcement comprising two rigid annuluses (12,13) which are centred on the second axis (Y) and which frame the hydraulic chambers (A,B) axially, the external reinforcement gripping these two rigid annuluses and sealing the hydraulic chambers (A,B),
in which pivot the intermediate reinforcement (11) comprises, beyond the two rigid annuluses (12,13) a first and a second collars (20,21) that extend radially outwards, thereby forming two shoulders oriented axially towards the two annuluses (12,13), the external reinforcement (26) being retained between these shoulders without play,
in which pivot the first and second collars (20,21) have a radial size that is greater than the inside diameter of the external reinforcement (26) and thus act as axial stops for the external reinforcement,
in which pivot the outside diameter of the external reinforcement (26) is greater than the radial size of at least the first collar (20),
in which pivot the first and second collars (20,21) are covered with an elastomer layer (22,23) belonging to the elastomer body (10),
**characterized in that** the outside diameter of the external reinforcement (26) is greater than the radial size of the elastomer layer (22) covering the first collar (20).

2. Hydraulic antivibration pivot according to Claim 1, in which the inside diameter of the external reinforcement (26) is at least 0.5 mm less than the radial size of the first and second collars (20,21).

3. Motor vehicle comprising an axle assembly equipped with two rigid arms (5), each rigid arm (5) having an annular wall (27) that defines at least one housing (27a) in which a hydraulic antivibration pivot (7) according to Claim 1 or 2 is engaged, the external reinforcement (26) being in direct radial contact with the said annular wall (27).

4. Motor vehicle according to Claim 3, in which the external reinforcement (26) is inserted tightly into the housing (27a).

5. Motor vehicle according to Claim 3 or 4, in which the antivibration pivot (7) is mounted across between two parallel end plates (2a), these being arranged perpendicularly to the second axis (Y) and belonging to the first rigid element (2).

6. Motor vehicle according to Claim 3, 4 or 5, in which the second collar (21) has a radial size greater than the outside diameter of the external reinforcement (26) and bears against the rigid arm (5).

7. Method of producing a hydraulic antivibration pivot (7) according to Claim 1 or 2, comprising the following steps:
a) moulding the elastomer body (10) onto the internal reinforcement (9) and the intermediate reinforcement (11),
b) engaging on the elastomer body (10) a metal tube (26a) having no elastomer and having an inside width greater than the radial size of one of the two shoulders formed by the two collars (20,21),
c) positioning the metal tube (26a) between the two shoulders,
d) and then contracting the metal tube to create the external reinforcement of the support, gripping the first and second annuluses of the intermediate reinforcement in order on the one hand to immobilize without play the external reinforcement between the two shoulders and on the other hand to seal the two hydraulic chambers (A,B), the contraction being realized in order the outside diameter of the external reinforcement (26) to be greater than the radial size of the layer (22) covering the first collar (20).

8. Production method according to Claim 7, in which step (d) takes place in a liquid bath that fills the hydraulic chambers (A,B).
